# NEUE EUROPÄISCHE PATENTSCHRIFT

(11) **EP 2 945 750 B2**
(45) Veröffentlichungstag und Bekanntmachung des Hinweises auf die Entscheidung über den Einspruch: **13.04.2022**
(45) Hinweis auf die Patenterteilung: 02.08.2017
(21) Anmeldenummer: 13750284.5
(22) Anmeldetag: 06.08.2013
(51) Int. Cl.: B02C 25/00, B02C 15/00

(54) **VERFAHREN ZUR ANTRIEBSREGELUNG SOWIE NACH DEM VERFAHREN ARBEITENDES ANTRIEBSSYSTEM**
DRIVE CONTROL METHOD AND DRIVE SYSTEM OPERATING ACCORDING TO SAID METHOD
PROCÉDÉ DE RÉGLAGE D'UN ENTRAÎNEMENT ET SYSTÈME D'ENTRAÎNEMENT FONCTIONNANT SELON CE PROCÉDÉ

(30) Priorität: 16.01.2013 DE 102013200578
(43) Veröffentlichungstag der Anmeldung: 25.11.2015
(73) Patentinhaber: Flender GmbH, 46395 Bocholt (DE)
(72) Erfinder: KUBE, Andreas, 52078 Aachen (DE)
(74) Vertreter: Michalski Hüttermann & Partner Patentanwälte mbB
(86) Internationale Anmeldenummer: PCT/EP2013/066483
(87) Internationale Veröffentlichungsnummer: WO 2014/111176

(56) Entgegenhaltungen:
- WO-A1-2008/049545
- WO-A1-2010/015564
- DE-A1-102007 033 256
- DE-A1-102009 057 732
- DE-A1-102011 018 705
- JP-A- H0 584 447
- JP-A- 2008 178 833

## Beschreibung

Verfahren zur Antriebsregelung sowie nach dem Verfahren arbeitendes Antriebssystem. Aus der DE-10/2007-033 256 ist z.B. eine Antriebssystem bekannt. Die vorliegende Erfindung betrifft ein Verfahren zur Antriebsregelung, nämlich ein Verfahren zur Antriebsregelung eines Schwerlastantriebs, insbesondere eines Schwerlastantriebs bei einer Vertikalmühle zum Zerkleinern spröder Materialien, zum Beispiel Zementrohmaterial, sowie ein korrespondierendes, nach dem Verfahren arbeitendes Antriebssystem.

Vertikalmühlen der oben genannten Art mit einem um die Vertikale rotierenden Mahlteller sowie Mahlwalzen oberhalb des Mahltellers neigen zu starken mechanischen Schwingungen. Die dabei entstehenden Kräfte und Momente können so stark werden, dass der Mahlprozess gestoppt werden muss, um Schäden am Antriebsstrang, nämlich insbesondere Elektromotor und Getriebe, oder der Anlage insgesamt zu vermeiden.

Um solche Schwingungen gering zu halten, muss der Betreiber der Mühle bisher die Prozessparameter, also insbesondere einen Anpressdruck der Mahlwalzen, eine Rezeptur des Mahlguts sowie Zugabemengen von Mahlhilfen, so gestalten, dass die Schwingungsanregung unter einem kritischen Niveau bleibt. Dies bedeutet jedoch unerwünschte Einschränkungen in der Prozessgestaltung, die sich negativ auf viele Bereiche auswirken. Betroffen sind zum Beispiel das Spektrum von mit dem jeweils erhaltenen Mahlgut herstellbaren Produkten, die Effektivität der Mühle, der erforderliche Energieeinsatz und die Kosteneffizienz. Trotzdem sind solche Maßnahmen unzuverlässig, da für die richtige Prozessführung viel Erfahrung erforderlich ist und die Eigenschaften der zu vermahlenden oder vermahlenen Naturmaterialien zwangsläufig immer unterschiedlich sind. Dies macht es erforderlich, den Prozess kontinuierlich zu optimieren und auf das Rohmaterial einzustellen.

Dennoch kommt es bisher immer wieder zu extremen Schwingungszuständen - in der Fachterminologie als "Rumpeln" der Mühle bezeichnet -, so dass die Mühle gestoppt sowie neu angefahren werden muss. Darunter leiden die Verfügbarkeit und die Produktivität der Anlage. Außerdem drohen Getriebe- und Anlagenschäden. Zur Umgehung dieses Problems wird die Prozessführung bisher besonders defensiv gestaltet, um diese Mühlenschwingungen möglichst zu vermeiden. Im Ergebnis leiden allerdings die Produktionsrate, die Produktqualität und die Palette der herstellbaren Produkte.

Vor diesem Hintergrund und aufgrund der wachsenden Anforderungen hinsichtlich Verfügbarkeit, Effizienz sowie der Lebensdauerkosten (TCO = Total Cost of Ownership) gewinnt die Auslegung und die Anordnung der elektrischen und mechanischen Komponenten eines Antriebssystems und des jeweiligen Antriebsstrangs eines Schwerlastantriebs, insbesondere einer Vertikalmühle, zunehmend an Bedeutung.

Für Vertikalmühlen stellen derzeit Antriebssysteme mit einem Getriebe und einem Elektromotor in Form eines Asynchronmotors, vorzugsweise einem Schleifringläufer, sowie einem den Elektromotor speisenden Frequenzumrichter eine bevorzugte Lösung dar. Hierbei sind die Mühlengetriebe in der Praxis häufig als Varianten von Kegel- oder Stirnrad-Planetengetrieben ausgeführt. Die Aufgabe des Getriebes ist neben der Drehzahl- und Drehmomentwandlung die Aufnahme der axialen Mahlkräfte und deren Weiterleitung in das Fundament.

In der Praxis ist eine Regelung eines solchen Antriebssystems für eine Vertikalmühle im Wesentlichen mit folgenden Problemen konfrontiert:
Um eine optimale Prozessführung gewährleisten zu können, ist es die erste, scheinbar triviale Aufgabe des Antriebs, die vorgegebene Drehzahl des Mahltellers zu liefern. Da das am Mahlteller abgeforderte Prozessmoment schwankt, ist eine Drehzahlregelung erforderlich.

Die auf die Antriebsmechanik wirkenden Lastschwankungen und Schwingungsanregungen sind geprägt durch Impulslasten, wie sie sich zum Beispiel ergeben, wenn die Mahlwalzen grobes Mahlgut überrollen, stochastische Lasten des Mahlvorgangs, periodische Anregungen aus der Getriebe- und Mühlenkinematik sowie einen variierenden Anpressdruck der Mahlwalzen. Das Zusammenwirken dieser Belastungseinflüsse führt zu einem komplexen Lastspiel, das sogar Resonanzschwingungen anfachen kann.

Neben den Triebstrangschwingungen kann auch ein instabiles, also zum Beispiel fluidisierendes oder von Welligkeit geprägtes Mahlbett extreme Schwingungszustände der Mühle, insbesondere ein Mühlenrumpeln, verursachen.

Schließlich macht es das Vermahlen von natürlichen Produkten weitgehend unvorhersehbar wie der Mahlprozess einzustellen ist, um einen ruhigen Lauf der Mühle zu garantieren. Daher ist es stets eine Herausforderung für den Operator im Leitstand, die richtigen Prozessparameter zu finden. Letztendlich kann der Antrieb allein einen ungünstig eingestellten Prozess zwar beruhigen, aber nicht korrigieren.

Der hier vorgestellte Ansatz befasst sich mit dem Effekt des unerwünschten Rumpelns einer Mühle und eine Aufgabe der vorliegenden Erfindung besteht entsprechend darin, eine Möglichkeit anzugeben, wie sich ein solches Rumpeln effizient vermeiden oder zumindest reduzieren lässt.

Zum Erkennen des Rumpelns einer Vertikalmühle werden bisher Schwingungssensoren verwendet, die an der Mühle angebracht sind und gegebenenfalls einen Not-Halt des Antriebs bewirken. Erfahrungsgemäß sprechen solche Schwingungssensoren allerdings gegenüber einem Anstieg der Momentenamplituden im Antrieb erst mit einem gewissen Zeitverzug an. Bis dahin können bereits schadhafte Lastmomente gewirkt und das Getriebe gefährdet haben. Auf der anderen Seite lässt ein Ausregeln von Momentenschwankungen nicht zwangsläufig auch deren Ursache, wie zum Beispiel eine Welligkeit des Mahlbetts, wieder abklingen.

Die oben genannte Aufgabe wird durch ein Verfahren zur Antriebsregelung einer Vertikalmühle mit den Merkmalen des Anspruchs 1 gelöst. Die Aufgabe wird außerdem durch ein Antriebssystem mit den Merkmalen des parallelen Vorrichtungsanspruchs gelöst. Die hier und im Folgenden mitunter auch nur kurz als Mühle bezeichnete Vertikalmühle umfasst einen um die Vertikale drehbaren Mahlteller, der mittels eines mindestens einen Elektromotor und ein Getriebe umfassenden Antriebsstrangs antreibbar ist und im Betrieb der Mühle angetrieben wird. Das in Anspruch 1 definierte Verfahren umfasst, dass ein aufgrund aufgenommener schwingungsrelevanter Messwerte resultierender Messwertverlauf auf das Auftreten eines vorgegebenen Musters in dem Messwertverlauf überwacht wird und dass im Falle eines in dem Messwertverlauf erkannten Musters die Drehzahl des Mahltellers automatisch um einen vorgegebenen oder vorgebbaren Anpassungswert erhöht oder verringert wird.

Schwingungsrelevante Messwerte sind dabei in Bezug auf die Mühle aufgenommene oder aufnehmbaren Messwerte, bei deren Auswertung mechanische Schwingungen der Mühle, insbesondere solche mechanischen Schwingungen, die als Rumpeln bezeichnet werden, erkennbar sind. Es kommen Sensoren in Betracht, die dem Antriebsstrang zugeordnet sind und dort schwingungsrelevante Messwerte aufnehmen. Dabei kann zum Beispiel vorgesehen sein, dass mittels eines derartigen Sensors eine Erfassung der Stromaufnahme des Elektromotors erfolgt und aus einer mit variierenden Lastsituationen korrelierten Stromaufnahme des Elektromotors schwingungsrelevante Daten abgeleitet werden, so dass insoweit auch Messwerte zu einem im Betrieb der Mühle jeweils aufgenommenen Motorstrom ein Beispiel für schwingungsrelevante Messwerte sind.

Der oben erwähnte Anpassungswert kann ein Bruchteil der momentanen Drehzahl des Mahltellers sein, insbesondere der momentanen Solldrehzahl, so dass im Falle eines in dem Messwertverlauf erkannten Musters die Drehzahl des Mahltellers automatisch um zum Beispiel 5% verringert wird. Die Erhöhung oder Verringerung der Drehzahl des Mahltellers erfolgt selbstverständlich nicht abrupt, sondern aufgrund der Trägheit der involvierten Massen kontinuierlich. Die aufgrund eines erkannten Musters erfolgende Erhöhung oder Verringerung der Drehzahl des Mahltellers bezieht sich damit auch auf eine zugrunde liegende Erhöhung oder Verringerung einer Solldrehzahl für den Mahlteller und eine dieser wiederum zugrunde liegenden Solldrehzahl für den Antrieb und dessen Elektromotor. Als Anpassungswert kommt auch die Differenz aus der momentanen Solldrehzahl oder der momentanen Drehzahl des Mahltellers und der minimalen Drehzahl des Mahltellers in Betracht. Dann wird die Solldrehzahl schlagartig deutlich reduziert und die tatsächliche Drehzahl sinkt kontinuierlich.

Bei einem zur Ausführung eines solchen Verfahrens und eventuell einzelner oder mehrerer im Folgenden beschriebener Ausführungsformen bestimmten Antriebssystem, nämlich einem Antriebssystem für eine Vertikalmühle mit einem um die Vertikale rotierenden Mahlteller, umfasst das Antriebssystem einen Elektromotor, einen den Elektromotor speisenden Frequenzumrichter sowie ein Getriebe zwischen dem Elektromotor und dem Mahlteller. Das Antriebssystem umfasst eine Mustererkennungsvorrichtung, wobei mittels der Mustererkennungsvorrichtung in einem aufgrund aufgenommener schwingungsrelevanter Messwerte resultierenden Messwertverlauf ein vorgegebenes oder vorgebbares Muster erkennbar ist, so dass im Falle eines erkannten Musters eine Drehzahl eines Mahltellers der Vertikalmühle automatisch um einen vorgegebenen oder vorgebbaren Anpassungswert erhöht oder verringert werden kann.

Kurzgefasst istdie Erfindung also ein Verfahren sowie eine Vorrichtung zur Antriebsregelung einer Schwerlastanordnung in Form eines Antriebssystems, bei dem bei Feststellen oder Antizipieren eines unerwünschten Schwingungszustands, nämlich im Rahmen der Erkennung eines Musters in den betrachten Messwerten (Mustererkennung), durch eine Erhöhung oder Verringerung (Variation) der Drehzahl die Schwingungen der Schwerlastanordnung vermieden, beseitigt oder zumindest reduziert werden. Ob mit dem hier beschriebenen Ansatz die unerwünschten Schwingungszustände, insbesondere das Rumpeln, vermieden, beseitigt oder "nur" reduziert werden, hängt von der Art des betrachteten Musters ab. Bei einem sehr konservativ gewählten Muster kann zum Beispiel bereits eine Zunahme einer Dynamik des Messwertverlaufs erkannt werden. Wenn bereits dann aufgrund eines erkannten Musters eine Erhöhung oder Verringerung der Drehzahl erfolgt, ist es eventuell möglich, das Rumpeln bereits vor dessen Ausbildung zu vermeiden. Wenn das Muster so gewählt wird, dass dessen Auftreten im Messwertverlauf nur erwartet werden kann, wenn sich das Rumpeln bereits ausgebildet hat, kann mittels einer Erhöhung oder Verringerung der Drehzahl aufgrund eines erkannten Musters das Rumpeln beseitigt oder zumindest reduziert werden. Das Vermeiden, Beseitigen oder Reduzieren der Schwingungen wird im Folgenden zusammenfassend kurz als Vermeiden bezeichnet.

Der Vorteil der Erfindung besteht darin, dass durch die Variation der Drehzahl des Mahltellers das Rumpeln der Mühle vermieden werden kann, ohne dass der Mahlvorgang gestoppt werden muss, und dass dieses Ergebnis durch einen vergleichsweise einfachen Eingriff in das Gesamtsystem, nämlich eine entsprechende Ansteuerung des Elektromotors, erzielt wird.

Im Übrigen ist der rotierende Mahlteller nur ein Teil der als Schwingungssystem auffassbaren Mühle. Grundsätzlich kommt - unter der Prämisse, dass der Betrieb der Mühle nicht unterbrochen werden soll - alternativ oder zusätzlich auch in Betracht, anstelle der Drehzahl des Mahltellers andere Parameter des Schwingungssystems zu beeinflussen. Zum Beispiel ist auch das Mahlgut auf dem Mahlteller ein Teil des Schwingungssystems, so dass sich durch Wassereindüsung auf das Mahlgut dessen Eigenschaften beeinflussen lassen. Alternativ oder zusätzlich kann der Mahlwalzendruck beeinflusst werden, denn die Mahlwalzen sind ebenfalls Teil des Schwingungssystems. Auch derartige Beeinflussungen des Schwingungssystems können in Abhängigkeit von einem im Messwertverlauf erkannten Muster erfolgen.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin. Sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist. Schließlich ist darauf hinzuweisen, dass das hier angegebene Verfahren auch entsprechend der abhängigen Vorrichtungsansprüche weitergebildet sein kann und umgekehrt.

Wenn der Elektromotor von einem Frequenzumrichter gespeist wird, kann die Erhöhung oder Verringerung der Drehzahl des Mahltellers um den Anpassungswert mittels einer entsprechenden Ansteuerung des Frequenzumrichters erfolgen. Eine Alternative zu einem Frequenzumrichter ist ein Überlagerungsgetriebe, mit dem in grundsätzlich äquivalenter Art und Weise die oben beschriebene Variation der Drehzahl des Mahltellers erreicht werden kann.

Bei dem Verfahren werden als schwingungsrelevante Messwerte Drehmoment- oder Drehzahlmesswerte verwendet und aufgenommen. Die weitere Erläuterung des hier vorgeschlagenen Ansatzes basiert auf solchen Drehmoment- oder Drehzahlmesswerten. Diese werden im Folgenden zusammenfassend als Messwerte und ein resultierender Drehmoment-oder Drehzahlmesswertverlauf entsprechend als Messwertverlauf bezeichnet. Zum Erhalt eines solchen Messwertverlaufs und der zugrunde liegenden Messwerte wird mit einer Sensorik, also zumindest einem von der Sensorik umfassten oder zu der Sensorik gehörenden Sensor, eine Drehzahl eines rotierenden Bauteils des Antriebsstrangs und/oder mindestens ein im oder auf das Getriebe wirkendes Antriebs- und/oder Stützmoment erfasst.

Eine korrespondierende Ausführung des oben skizzierten Antriebssystems zeichnet sich durch eine derartige Sensorik zum Erhalt eines schwingungsrelevanten Messwerts in Form eines Drehmoment- oder Drehzahlmesswerts aus, wobei mittels der Sensorik eine Drehzahl eines rotierenden Bauteils der Vertikalmühle und/oder mindestens ein im oder auf das Getriebe wirkendes Antriebs- und/oder Stützmoment erfassbar ist und im Betrieb erfasst wird.

In diesem Zusammenhang ist anzumerken, dass die Verwendung von Sensoren, zum Beispiel Sensoren zur Aufnahme von Drehmoment- oder Drehzahlmesswerten, im Antriebsstrang (Antriebssensorik) anstelle von Schwingungssensoren an der Mühlenkonstruktion bisher offenbar nicht in Betracht gezogen worden ist. Nach den Erkenntnissen des Erfinders lässt sich aber auch mit solchen Messwerten eine mechanische Schwingung der Mühle und damit auch ein Rumpeln der Mühle erkennen. Tatsächlich ist es sogar so, dass solche Messwerte das jeweilige Prozessgeschehen noch unmittelbarer abbilden, denn die Vorgänge im Mahlwerk zeichnen sich nach der Erkenntnis des Erfinders in Drehfreiheitsgrad des Antriebs wesentlich deutlicher als im Schwingungsniveau der gesamten Mühlenkonstruktion ab. Dies liegt daran, dass das Rumpeln zum Beispiel aufgrund starker Torsionsschwingungen im Antriebsstrang oder aufgrund eines periodischen Zusammenbruchs der Stützwirkung des Mahlbetts auf die Mahlwalzen entsteht. Im Zuge des Verlustes dieser Stützwirkung, zum Beispiel aufgrund einer Welligkeit des Mahlbetts oder einem Beiseiteweichen eines fluidisierenden Mahlguts, entsteht auch ein Einbruch des Belastungsmoments, das aus dem Mahlbett auf den Mahlteller und somit direkt auf den Antriebsstrang wirkt. Dieser Momentenverlauf ist in den genannten Messwerten direkt zu erkennen und zwar noch bevor die Mahlwalzen sich so stark bewegen, dass sich die Schwingung auch spürbar auf die weitere Mühlenkonstruktion ausbreitet. Auf diese Weise lassen sich unerwünschte Zustände wie das Mühlenrumpeln früher und genauer erkennen. Bei vergleichenden Untersuchungen hat sich herausgestellt, dass eine Erkennung des Mühlenrumpelns über Schwingungssensoren üblicherweise frühestens nach mehreren Sekunden erfolgt. In dieser Zeit erfährt der Antrieb leicht über einhundert Lastzyklen (bei einer Rumpelfrequenz von zum Beispiel 15 Hz). Eine Auswertung der Antriebssensorik lässt die Identifikation des Rumpelns bereits nach drei bis zehn Lastzyklen, also in weniger als einer Sekunde, zu. Der Vorteil einer Verwendung einer solchen Antriebssensorik und der damit erhältlichen Messwerte besteht also darin, dass aufgrund eines früher erkennbaren Mühlenrumpelns Gegenmaßnahmen, also zum Beispiel auch eine Notabschaltung des Antriebs ("Not-Aus"), aber selbstverständlich auch die hier im Vordergrund stehende automatische Erhöhung oder Verringerung der Drehzahl des Mahltellers um den vorgegebenen oder vorgebbaren Anpassungswert, früher eingeleitet werden können und damit die Belastung des Antriebs, aber auch der Mühle insgesamt durch Mühlenrumpeln verringert werden kann.

Als überwachter Schwellwert kommt einerseits ein Schwellwert in Bezug auf die Momentanwerte des überwachten Messwerts, aber andererseits auch ein Schwellwert in Bezug auf eine zeitliche Änderung des Messwertverlaufs, also zum Beispiel in Bezug auf eine lokale Anstiegsgeschwindigkeit der Messwerte, in Betracht.

Die Mustererkennungsvorrichtung kann in Soft- und/oder Hardware ausgeführt sein und umfasst zumindest einen Komparator zur Überwachung der Überschreitung des Schwellwerts sowie - sofern das überwachte Muster eine mehrfache Überschreitung des Schwellwerts erfordert - einen Zähler, um die Anzahl der Schwellwertüberschreitungen zu erfassen. Die Mustererkennungsvorrichtung erzeugt ein Ausgangssignal, das die Drehzahlanpassung oder den Ausschaltvorgang des Antriebs (Not-Aus) auslöst.

Bei einer Ausführungsform dieser Variante des Verfahrens fungiert als überwachtes Muster die mehrmalige Überschreitung des Schwellwerts während einer vorgegebenen oder vorgebbaren Zeitspanne. Wenn also innerhalb der jeweiligen Zeitspanne eine mehrmalige Überschreitung des Schwellwerts festgestellt wird, gilt das Muster als erkannt und es wird die Drehzahlanpassung oder der Ausschaltvorgang (Not-Aus) ausgelöst. Die Mustererkennungsvorrichtung umfasst dann zusätzlich einen Zeitgeber, der zum Beispiel mit einer ersten Überschreitung des Schwellwerts gestartet wird und der mit seinem Ablauf einen Zähler zum Zählen der Anzahl der Schwellwertüberschreitungen zurücksetzt. Die Mustererkennungsvorrichtung erzeugt ein Ausgangssignal, wenn der Zähler innerhalb der Zeitspanne einen dem jeweiligen Muster entsprechenden Wert erreicht. Wenn der Zähler diesen Wert nicht erreicht, wird der Zähler beim Erreichen des Endes der Zeitspanne durch den Zeitgeber zurückgesetzt und es wird kein Ausgangssignal erzeugt.

Bei einer zusätzlichen oder alternativen Ausführungsform des Verfahrens fungiert als überwachtes Muster die ein- oder mehrmalige Überschreitung des Schwellwerts mit einer vorgegebenen oder vorgebbaren Geschwindigkeit. Es wird also zusätzlich die Steigung des Messwertverlaufs in Betracht gezogen und die Überschreitung des Schwellwerts wird im Rahmen der Mustererkennung nur dann berücksichtigt, wenn die Überschreitung mit einer durch die Geschwindigkeit bestimmten Steigung des Messwertverlaufs erfolgt. Diese Variante des Verfahrens kann auch mit einem ersten und einem niedrigeren, zweiten Schwellwert arbeiten, so dass eine Überschreitung des zweiten Schwellwerts nur dann im Rahmen der Mustererkennung in Betracht gezogen wird, wenn dieser mit einer bestimmten Geschwindigkeit/Steigung im Messwertverlauf überschritten wird und jede Überschreitung des ersten Schwellwerts im Rahmen der Mustererkennung in Betracht gezogen wird.

Die bisher beschriebenen Muster und deren Erkennung mehrfache Schwellwertüberschreitung innerhalb einer bestimmten Zeitspanne; ein- oder mehrfache Schwellwertüberschreitung mit einer bestimmten Geschwindigkeit) können auch kombiniert werden, so dass als Muster zum Beispiel eine mehrfache Schwellwertüberschreitung mit einer bestimmten Geschwindigkeit innerhalb einer bestimmten Zeitspanne fungiert.

Alternativ oder zusätzlich kommt in Betracht, dass als überwachtes Muster eine Überschreitung eines vorgegebenen oder vorgebbaren Schwellwerts in einer Darstellung des Drehmoment-oder Drehzahlmesswertverlaufs in einem Frequenzbereich fungiert. Auch hier kann das Muster und dessen Erkennung so wie oben erläutert erweitert werden, so dass das Muster zum Beispiel eine mehrfache Überschreitung des Schwellwerts, eine mehrfache Überschreitung des Schwellwerts innerhalb einer bestimmten Zeitspanne und/oder eine mehrfache Überschreitung des Schwellwerts mit einer bestimmten Geschwindigkeit oder die Überschreitung des Schwellwerts für eine bestimmte Dauer erfordert.

Bei einer Ausführungsform des Verfahrens wird die Mustererkennung kontinuierlich durchgeführt. Jedes Mal, wenn in dem Messwertverlauf ein überwachtes Muster erkannt wird, wird automatisch und vorübergehend die Solldrehzahl des Mahltellers um den Anpassungswert erhöht oder verringert.

Wenn als Anpassungswert die Differenz aus der momentanen Drehzahl oder der momentanen Solldrehzahl und einer minimalen Drehzahl verwendet wird, sinkt die Solldrehzahl schlagartig deutlich und die tatsächliche Drehzahl (Istdrehzahl) folgt aufgrund der Trägheit der bewegten Massen kontinuierlich. Sobald aufgrund der fortwährenden Durchführung der Musterkennung beim kontinuierlichen Absinken der Istdrehzahl das überwachte Muster nicht mehr detektiert wird, wird die Solldrehzahl wieder auf den ursprünglichen Wert zurückgesetzt. Die Solldrehzahl steigt entsprechend schlagartig wieder an und die tatsächliche Istdrehzahl folgt der Solldrehzahl kontinuierlich. Wenn bis zum Erreichen der Solldrehzahl oder nach dem Erreichen der Solldrehzahl das Muster im Messwertverlauf erneut erkannt wird, wird die Solldrehzahl wieder um den Anpassungswert reduziert und mit dem Verschwinden des Musters im Messwertverlauf wieder auf den ursprünglichen Sollwert zurückgesetzt, und so weiter.

Alternativ wird als Anpassungswert zum Beispiel ein Bruchteil der momentanen Solldrehzahl oder der momentanen Drehzahl verwendet. Wenn dann zum Beispiel eine Verringerung der Drehzahl des Mahltellers bei einem erkannten Muster vorgesehen ist, wird die Drehzahl bei einer erstmaligen Erkennung des Musters um einen derartigen Anpassungswert, zum Beispiel 5% der Solldrehzahl, verringert und bei jeder weiteren, zeitlich späteren Erkennung eines Musters erneut um den Anpassungswert verringert. Die Drehzahl des Mahltellers reduziert sich damit fortwährend solange die schwingungskritische Situation anhält und entsprechende Muster im betrachteten Messwertverlauf erkannt werden. Wenn während einer vorgegebenen oder vorgebbaren Zeitspanne kein Muster erkannt wird und die Drehzahl des Mahltellers aufgrund einer vorangehenden Drehzahlvariation noch unter oder über dem ursprünglich vorgegebenen Drehzahlsollwert liegt, kann die Drehzahl kontinuierlich auf den ursprünglichen Sollwert zurückgeführt werden. Alternativ ist auch eine diskrete Rückführung der Drehzahl auf den ursprünglichen Sollwert möglich. Dann wird jedes Mal, wenn innerhalb einer vorgegebenen oder vorgebbaren Zeitspanne kein Muster der oben beschriebenen Art erkannt wird, die zuvor vorgenommene Drehzahlanpassung teilweise, nämlich im Umfang des Anpassungswerts, rückgängig gemacht, bis schließlich wieder die ursprüngliche Solldrehzahl erreicht ist.

Das Verfahren und das nach dem Verfahren arbeitende Antriebssystem basieren auf der Funktionalität der Mustererkennungsvorrichtung. Oben sind bereits einzelne Aspekte der Funktionalität der Mustererkennungsvorrichtung beschrieben worden, nämlich ein Komparator zur Schwellwertüberwachung, ein optionaler Zähler zur Erfassung der Anzahl der Überschreitungen des Schwellwerts und ein optionaler Zeitgeber zur Überwachung der Anzahl der Schwellwertüberschreitungen innerhalb einer bestimmten Zeitspanne. Die Funktionalität der Mustererkennungsvorrichtung, die der Mustererkennung funktional vorgeschaltete Erfassung und Aufbereitung der betrachteten Messwerte sowie die der Mustererkennung funktional nachgeschaltete Auslösung der Drehzahlanpassung oder gegebenenfalls des Not-Aus kann in Hard- und/oder Software realisiert sein. Soweit eine Realisierung in Software erfolgt ist die Erfindung auch ein Computerprogramm mit Programmcodemitteln, um alle Schritte des hier und im Folgenden beschriebenen Verfahrens durchzuführen, wenn das Computerprogramm auf einem Steuergerät oder dergleichen für ein Antriebssystem für eine Vertikalmühle ausgeführt wird. Im Weiteren ist die Erfindung damit auch ein digitales Speichermedium mit elektronisch auslesbaren Steuersignalen, die so mit einem programmierbaren Steuergerät für ein Antriebssystem für eine Vertikalmühle zusammenwirken können, dass ein solches Verfahren ausgeführt wird. Schließlich ist die Erfindung auch ein Antriebssystem der oben genannten Art, das eine Verarbeitungseinheit und einen Speicher umfasst, wobei in den Speicher ein solches Computerprogramm geladen ist und im Betrieb des Antriebssystems durch dessen Verarbeitungseinheit ausgeführt wird.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Hinzuweisen ist noch darauf, dass der hier beschriebene Ansatz und einzelne und gegebenenfalls kombinierte Ausführungsformen auch mit dem in der parallelen, auf denselben Erfinder zurückgehenden Anmeldung derselben Anmelderin mit dem internen Aktenzeichen der Anmelderin 201312092 (amtliches Aktenzeichen noch nicht bekannt) vorgeschlagenen Ansatz und dort beschriebenen speziellen Ausführungsformen kombinierbar ist. Insoweit wird der vollständige Offenbarungsgehalt dieser parallelen Anmeldung, speziell im Hinblick auf die dort beschriebene periodische Variation der Drehzahl des Mahltellers, die schlagwortartig auch als "Pendelbetrieb" bezeichnet werden kann, in die hier vorgelegte Beschreibung einbezogen.

Das Ausführungsbeispiel ist nicht als Einschränkung der Erfindung zu verstehen. Vielmehr sind im Rahmen der vorliegenden Offenbarung auch Änderungen und Modifikationen möglich, insbesondere solche Varianten und Kombinationen, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- FIG 1: eine schematisch stark vereinfachte Darstellung einer Vertikalmühle mit einem mittels eines Schwerlastantriebs angetriebenen Mahlteller,
- FIG 2: eine Draufsicht auf den Mahlteller mit einem dortigen Mahlbett,
- FIG 3: eine Darstellung eines in Bezug auf die Vertikalmühle aufgenommenen Messwertverlaufs und eine aufgrund einer Überwachung des Messwertverlaufs resultierende Anpassung einer Drehzahl des Schwerlastantriebs,
- FIG 4: und
- FIG 5: real im Rahmen einer Testsituation aufgenommene Messwerte zu einem im oder auf das Getriebe wirkenden Drehmoment bzw. zu einer Drehzahl des Mahltellers sowie
- FIG 6: eine Darstellung eines Antriebssystems der Vertikalmühle mit einem davon umfassten Steuergerät, welches wiederum eine Mustererkennungsvorrichtung oder eine Softwareimplementation eines Mustererkennungsverfahrens zur Auswertung eines Messwertverlaufs der in FIG 3 gezeigten Art umfasst.

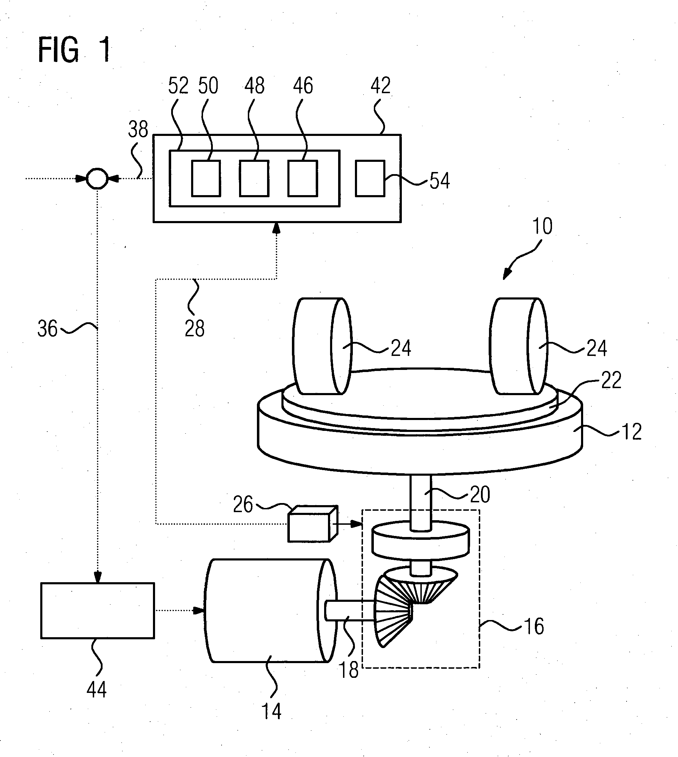

Die Darstellung in FIG 1 zeigt schematisch stark vereinfacht eine Vertikalmühle 10 zum Zerkleinern spröder Materialien, zum Beispiel Zementrohmaterial. Die Vertikalmühle 10 umfasst einen um die Vertikale drehbaren Mahlteller 12. Der Antrieb des Mahltellers 12 erfolgt mittels eines Schwerlastantriebs in Form eines Motors, insbesondere eines Elektromotors 14, und im hier gezeigten Beispiel mittels eines zwischen Elektromotor 14 und Mahlteller 12 befindlichen Getriebes 16. Das Getriebe 16 ist hier ohne Verzicht auf eine weitergehende Allgemeingültigkeit als Kegelradverzahnung mit einem anschließenden, ohne nähere Details dargestellten Planetengetriebe gezeigt. Das Getriebe 16 kann zum Beispiel auch eine Stirnradverzahnung oder dergleichen und/oder ein vorgeschaltetes oder anschließendes Planetengetriebe oder dergleichen umfassen.

Die Vertikalmühle 10 umfasst zumindest eine angetriebene Welle. In der Darstellung in FIG 1 umfasst die Vertikalmühle 10 eine Motorwelle 18 und eine Mahltellerwelle 20. Sämtliche Mittel zur Übertragung der Antriebskraft des Elektromotors 14 auf den Mahlteller 12 werden als Antriebsstrang bezeichnet. Hier gehören zum Antriebsstrang zumindest der Elektromotor 14, die Motorwelle 18, das Getriebe 16 und die Mahltellerwelle 20.

Die Vertikalmühle 10 ist insgesamt ein schwingfähiges System. Im Betrieb der Vertikalmühle 10 versetzt der Elektromotor 14 den Mahlteller 12 in Rotation. Auf dem Mahlteller 12 befindet sich als Resultat des Mahlvorgangs sowie als Resultat von zugeführten, zu mahlenden Stoffen ein Mahlbett 22, also eine Mischung von gemahlenem und zu mahlendem Gut. Der Mahleffekt wird erreicht, indem eine Mahlwalze 24 oder mehrere Mahlwalzen 24 einerseits aufgrund ihres Gewichts, aber andererseits gegebenenfalls auch zusätzlich aufgebrachter Kräfte, die zum Beispiel mittels eines an einer schwenkbeweglich gelagerten Mahlwalze 24 angreifenden Hydraulikzylinders oder dergleichen aufgebracht werden, auf das Mahlbett 22 und den rotierenden Mahlteller 12 gepresst werden.

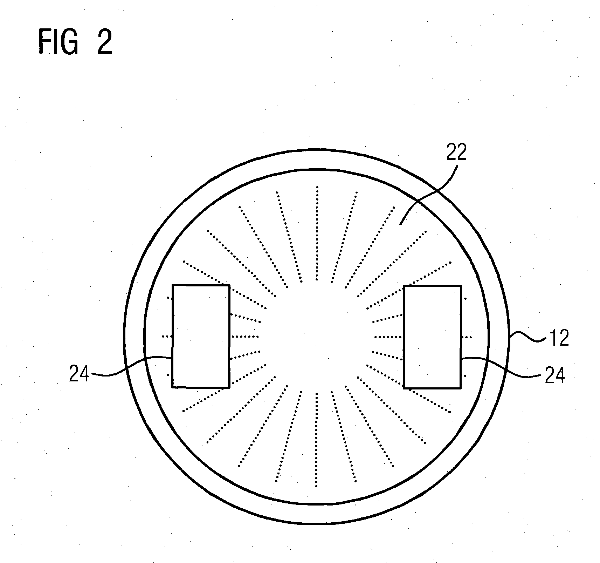

Die Darstellung in FIG. 2 zeigt eine schematisch vereinfachte Prinzipdarstellung einer Draufsicht auf den Mahlteller 12 mit dem Mahlbett 22 und den hier zwei Mahlwalzen 24. Die gestrichelt gezeichneten radialen Linien innerhalb des Mahlbetts 22 sollen eine sich während des Mahlvorgangs häufig einstellende Welligkeit des Mahlbetts 22 andeuten. Eine solche Welligkeit des Mahlbetts 22 ist eine von mehreren möglichen Ursachen für das Mühlenrumpeln, das mit dem hier vorgestellten Ansatz vermieden werden soll, und eine zeichnerisch besonders leicht darstellbare Ursache für das Mühlenrumpeln. Bei einer Welligkeit des Mahlbetts 22 ist leicht vorstellbar, dass die relativ zur Mahlbettoberfläche beweglich, insbesondere schwenkbeweglich angeordneten Mahlwalzen 24 der Oberfläche des Mahlbetts 22 folgen und sich die damit ausgelöste Auf- und Abwärtsbewegung der Mahlwalzen 24 in Form von Schwingungen auf die Mühle 10 überträgt. Eine andere, zeichnerisch nicht darstellbare Ursache für das Mühlenrumpeln und noch stärkere Schwingungen in Form von Auf- und Abwärtsbewegungen der Mahlwalzen 24 ist ein fluidisierendes Mahlbett 22 und ein resultierender periodischer Zusammenbruch der Stützwirkung des Mahlbetts 22. Die Mahlwalzen 24 sinken dann lokal im Mahlbett 22 ein und gelangen aufgrund ihrer Eigendrehung und der Drehung des Mahltellers 12 an anderer Stelle des Mahlbetts 22 wieder an die Oberfläche, um dann eventuell erneut einzubrechen, und so weiter. Eine weitere, ebenfalls zeichnerisch kaum darstellbare Ursache für Mühlenrumpeln sind starke Torsionsschwingungen im Antriebsstrang. Wenn auf diese Weise eine Eigenfrequenz der Mühle 10 angeregt wird, kann sogar eine Resonanz angefacht werden.

Bisher werden solche Schwingungen mittels einer am Mühlengerüst angebrachten Sensorik (Schwingungssensor; nicht gezeigt) erfasst. Sobald ein von einer solchen Sensorik aufgenommener Schwingungsmesswert einen Grenzwert überschreitet, wird der Elektromotor 14 gestoppt und die Mühle 10 wird später neu angefahren.

Hier wird vorgeschlagen, dass mittels einer insbesondere dem Antriebsstrang, also insbesondere Elektromotor 14, Motorwelle 18, Getriebe 16 oder Mahltellerwelle 20, oder dem Mahlteller 12 zugeordneten Sensorik 26 (FIG 1) schwingungsrelevante Messwerte 28, Drehmoment- oder Drehzahlmesswerte, erfasst werden. Die erfassten Drehmomentmesswerte sind dabei ein Maß für das mittels des Getriebes 16 übertragene Moment oder Getriebemoment, also ein Maß für ein Moment, das zur Unterscheidung von einem auf den Elektromotor 14 wirkenden elektrischen Moment als das im Antriebsstrang, insbesondere im Getriebe 16, mechanisch wirksame Moment bezeichnet wird.

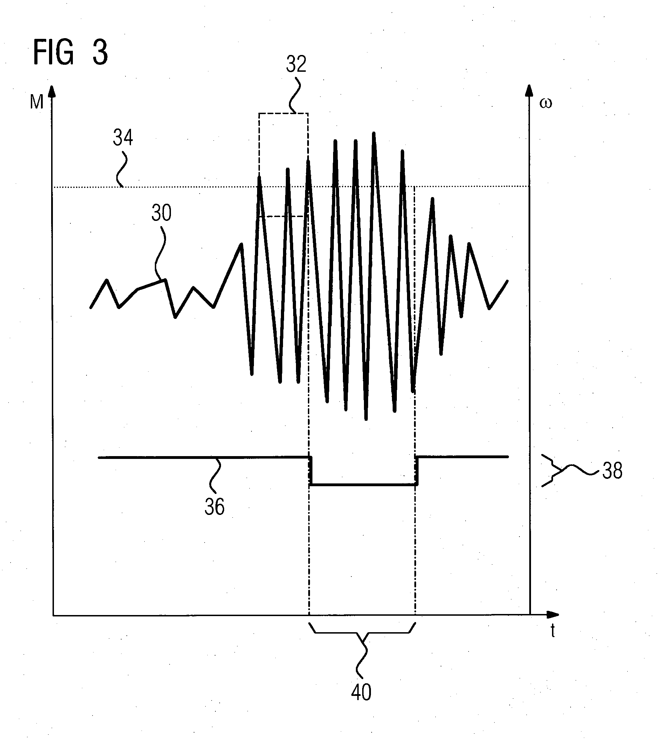

Auf Basis einer Mehrzahl mittels der Sensorik 26 aufgenommener Messwerte 28, zum Beispiel auf Basis einer Mehrzahl von Drehmomentmesswerten, ergibt sich ein Messwertverlauf 30 (FIG 3), nämlich ein Drehmomentmesswertverlauf, und insoweit ist in der Darstellung in FIG 3 die linke Koordinatenachse mit dem Formelzeichen M bezeichnet. Dieser Messwertverlauf 30 wird auf das Auftreten eines vorgegebenen oder vorgebbaren Musters 32 (FIG 3) überwacht. Als Muster 32 ist hier beispielhaft das mehrfache, hier dreimalige Überschreiten eines vorgegebenen oder variabel vorgebbaren Schwellwerts 34 (Drehmomentschwellwert) gezeigt. Im Falle eines in dem Messwertverlauf 30 erkannten Musters 32 wird die Drehzahl des Mahltellers 12, also die dafür ursächliche Drehzahl des Elektromotors 14, automatisch um einen vorgegebenen oder vorgebbaren Anpassungswert 38 erhöht oder verringert. Dazu zeigt die Darstellung in FIG 3 im selben Koordinatensystem über der rechts eingezeichneten und mit dem Formelzeichen ω bezeichneten Koordinatenachse auch den Verlauf einer Solldrehzahl 36 des Elektromotors 14. Hier ist gezeigt, dass aufgrund eines erkannten Musters 32 (mehrfache Überschreitung des Schwellwerts 34) im Messwertverlauf 30 die Solldrehzahl 36 des Elektromotors 14 um den Anpassungswert 38 verringert wird. Indem auf diese Weise auf einen aufgrund des Antriebs des Mahltellers 12 resultierenden Messwertverlauf 30 durch mittelbare oder unmittelbare Anpassung der Drehzahl des Mahltellers 12 reagiert wird, handelt es sich um ein Verfahren zur Antriebsregelung der Mühle 10.

Wenn das jeweilige Muster 32 im Messwertverlauf 30 erkannt wird, ist damit auch der Zustand der rumpelnden Mühle 10 erkannt. Die Zeitspanne des Rumpelns 40 ist in der Darstellung in FIG 3 als der Bereich zwischen der letzten zum Muster 32 gehörenden Schwellwertüberschreitung und einer nachfolgenden, dauerhaften Unterschreitung des Schwellwerts 34 eingezeichnet.

Wenn das Rumpeln 40 aufgrund der Anpassung der Drehzahl abgeklungen ist, kann die Solldrehzahl 36 wieder auf ihren ursprünglichen Wert zurückgeführt werden (nicht gezeigt). Ebenfalls nicht gezeigt ist, dass bei einer besonderen Ausführungsform des hier vorgeschlagenen Verfahrens bei andauerndem Rumpeln 40, also bei einem auch bei einer bereits angepassten Drehzahl späteren, nochmaligen Auftreten des Musters 32 im Messwertverlauf 30, die Solldrehzahl 36 des Elektromotors 14 erneut um den Anpassungswert 38 erhöht oder verringert wird.

Dies geschieht dann so oft bis das Rumpeln 40 abklingt. Die Anpassung der Solldrehzahl 36 des Elektromotors 14 ist dabei eine mittelbare Anpassung der Drehzahl des Mahltellers 12. Aufgrund von zum Beispiel einer Welligkeit des Mahlbetts 22 resultierende Mühlenschwingungen oder resultierendes Rumpeln stellen sich bei einer so veränderten Drehzahl gar nicht erst ein, klingen ab oder werden zumindest reduziert.

Insofern ist anzumerken, dass mittels des hier vorgeschlagenen Ansatzes auch bereits ein eventuell drohendes Rumpeln erkennbar ist. Wenn hier von einem erkannten Rumpeln gesprochen wird, schließt dies also auch eine erkannte Gefahr für ein eventuell drohendes Rumpeln ein. Mit dem hier vorgeschlagenen Ansatz kann also das Rumpeln der Mühle 10 vermieden, beseitigt oder zumindest reduziert werden. Vermeiden bedeutet dabei, dass durch die Mustererkennung eine Gefahr für eventuelles Rumpeln antizipiert wird und es aufgrund der Anpassung der Drehzahl erst gar nicht zu einem Rumpeln kommt. Beseitigen bedeutet, dass ein mittels der Mustererkennung identifiziertes Rumpeln aufgrund der Anpassung der Drehzahl wieder vollständig abklingt. Reduzieren meint, dass ein mittels der Mustererkennung identifiziertes Rumpeln aufgrund der Anpassung der Drehzahl zumindest verringert wird.

Das oben Gesagte gilt entsprechend für mittels der Sensorik 26 oder zumindest eines von einer solchen Sensorik 26 umfassten Sensors aufgenommene Drehzahlmesswerte und einen entsprechenden Drehzahlmesswertverlauf.

Nicht gezeigt ist in FIG 3, dass bei der Mustererkennung eine Anzahl von Schwellwertüberschreitungen innerhalb einer bestimmten Zeitspanne und/oder eine Anstiegsgeschwindigkeit des Messwertverlaufs bei der Schwellwertüberschreitung berücksichtigt werden kann.

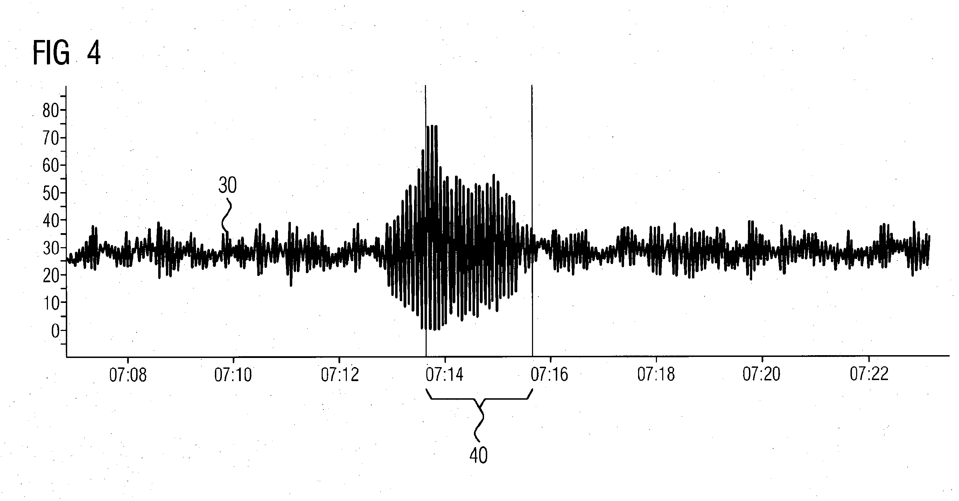

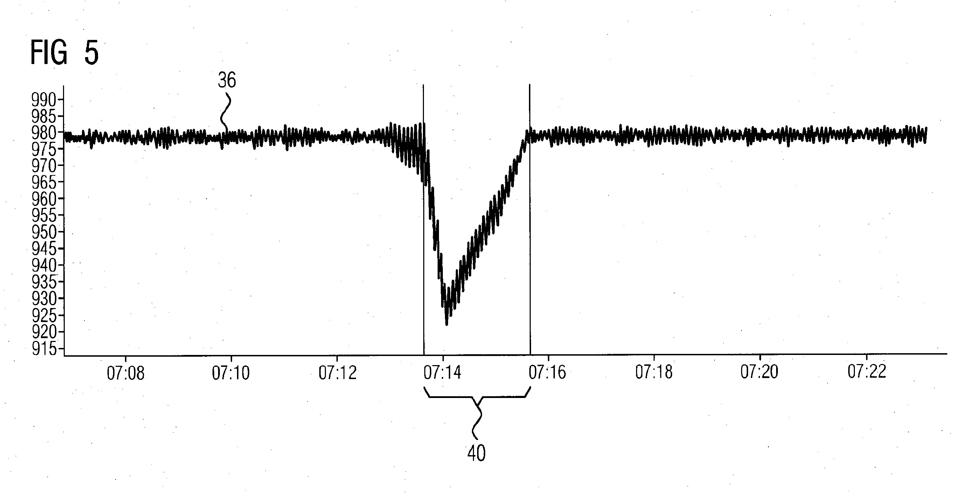

Die Darstellungen in FIG 4 und FIG 5 (die Abszissen zeigen die Zeit in der Einheit [Minuten:Sekunden]) zeigen reale, in einer Testsituation aufgenommene Messwertverläufe 30, nämlich einen Verlauf eines Messwerts 28 zum im oder auf das Getriebe 16 wirkenden Drehmoment (Messwertverlauf 30) und eine resultierende Drehzahl des Mahltellers 12. Deutlich erkennbar ist die starke Schwankung des Drehmoments etwa in der Mitte des Erfassungszeitraums. Diese starken Schwankungen werden nach einiger Zeit (Mustererkennung) als Rumpeln 40 erkannt, zum Beispiel, weil der Schwellwert 34 einmalig oder mehrfach überschritten wurde. Dann wird (siehe FIG 5, die auf gleicher Zeitbasis den korrespondierenden Verlauf der Drehzahl des Mahltellers 12 zeigt) die Drehzahl des Mahltellers 12 automatisch verringert, zum Beispiel indem als Anpassungswert 38 die Differenz aus der momentanen Solldrehzahl oder der momentanen Drehzahl und einer minimalen Drehzahl verwendet wird und die Solldrehzahl um den Anpassungswert 38 verringert wird (die minimale Drehzahl wird dann als Solldrehzahl verwendet). In der Darstellung in FIG 5 ist der Rückgang der aufgrund des Rumpelns immer noch stark schwankenden Drehzahl erkennbar. Sobald das überwachte Muster 32 im Messwertverlauf 30 nicht mehr erkannt wird, wird die Solldrehzahl des Mahltellers 12 wieder auf den ursprünglichen Wert gesetzt. In der Darstellung in FIG 5 erkennt man insoweit den Anstieg der tatsächlichen Drehzahl. Schließlich wird wieder die ursprüngliche Drehzahl erreicht. Auch beim Erreichen der ursprünglichen Drehzahl ist die Dynamik des Messwertverlaufs 30 geringer als dies während des erkannten Rumpelns 40 der Fall war. Das erkannte Rumpeln 40 wurde also beseitigt.

Die Mustererkennung erfolgt mittels einer Mustererkennungsvorrichtung 42 (FIG 1) und die Mustererkennungsvorrichtung 42 gibt im Falle eines erkannten Musters 32 einen Anpassungswert 38 zur Erhöhung oder Verringerung der Drehzahl des Elektromotors 14 aus. Aufgrund des Anpassungswerts 38 ändert sich die momentan zum Betrieb des Elektromotors 14 vorgesehene Solldrehzahl 36. Diese wird einem dem Elektromotor 14 in an sich bekannter Art und Weise vorgeschalteten Frequenzumrichter 44 zugeführt, der aufgrund der Solldrehzahl 36 eine jeweilige Versorgungsspannung, insbesondere Wechselspannung, zum Antrieb des Elektromotors 14 erzeugt. Anstelle eines Frequenzumrichters 48 oder zusätzlich zu einem Frequenzumrichter 48 kommt auch die Verwendung eines Überlagerungsgetriebes in Betracht.

Die Mustererkennungsvorrichtung 42 umfasst zumindest einen in Soft- oder Hardware ausgeführten Komparator 46 zur Überwachung einer Überschreitung eines Schwellwerts 34 im Messwertverlauf 30 sowie einen optionalen, ebenfalls entweder in Soft- oder Hardware ausgeführten Zähler 48 zum Zählen der Anzahl des Schwellwertüberschreitungen sowie einen gleichfalls optionalen, in Soft- oder Hardware ausführten Zeitgeber 50 zur Erfassung, ob eine bestimmte Anzahl von Schwellwertüberschreitungen in einem mittels des Zeitgebers 50 implementierten Zeitraum erfolgt.

Wenn die Mustererkennung in Software ausgeführt ist, sind der Komparator 46 und gegebenenfalls der Zähler 48 sowie der Zeitgeber Funktionalitäten eines zur Musterkennung vorgesehenen Computerprogramms 52, das in einen nicht separat dargestellten Speicher der Mustererkennungsvorrichtung 42 geladen und im Betrieb durch eine Verarbeitungseinheit 54 in Form von oder nach Art eines Mikroprozessors ausgeführt wird.

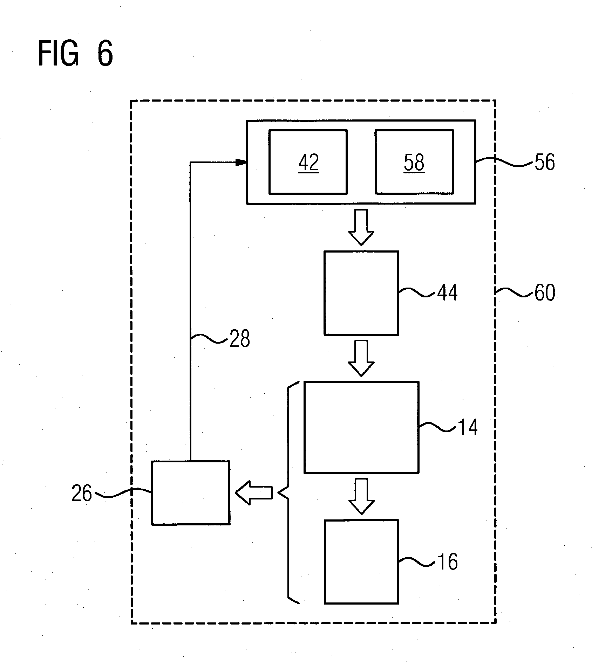

Die Darstellung in FIG 6 zeigt abschließend in schematisch vereinfachter Form, dass die Mustererkennungsvorrichtung 42 zum Beispiel eine Teilfunktionalität eines Steuergeräts 56 oder dergleichen, also einer Steuerungseinrichtung zur Ansteuerung des Frequenzumrichters 44, ist. Das Steuergerät 56 kann neben der Mustererkennungsvorrichtung 42 oder einer Softwareimplementation der Mustererkennungsvorrichtung 42 auch weitere Funktionseinheiten, wie zum Beispiel eine Regelungsvorrichtung 58 zur Regelung der Drehzahl des Elektromotors 14 oder ähnliches, umfassen. Das Steuergerät 56, der Frequenzumrichter 44 und der Elektromotor 14 bilden zusammen ein Antriebssystem 60 zum Antrieb der Mühle 10.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

Einzelne im Vordergrund stehende Aspekte der hier eingereichten Beschreibung lassen sich damit kurz wie folgt zusammenfassen: Angegeben werden ein Verfahren zur Antriebsregelung einer Vertikalmühle 10 mit einem um die Vertikale rotierbaren Mahlteller 12, wobei der Mahlteller 12 durch einen mindestens einen Elektromotor 14 und ein Getriebe 16 umfassenden Antriebsstrang antreibbar ist, wobei ein aufgrund der aufgenommener Drehmoment- oder Drehzahlmesswerte 28 resultierender Messwertverlauf 30 auf das Auftreten eines vorgegebenen Musters 32 in dem Messwertverlauf 30 überwacht wird und wobei im Falle eines in dem Messwertverlauf 30 erkannten Musters 32 die Drehzahl des Mahltellers 12 automatisch und normalerweise nur kurzzeitig um einen vorgegebenen oder vorgebbaren Anpassungswert 38 erhöht oder verringert wird, um ein Rumpeln der Mühle 10 zu vermeiden, sowie ein nach dem Verfahren arbeitendes Antriebssystem 60.

Die Abgrenzung des hier beschriebenen Ansatzes zu dem in der parallelen Anmeldung beschriebenen Pendelbetrieb vermag eventuell ein Zahlenbeispiel zur Illustration der grundsätzlichen Größenordnungen verdeutlichen: Beim Pendelbetrieb ist eine sanfte Variationsgeschwindigkeit von zum Beispiel 4*1% in 10s (=0,4%/s) bei einer exemplarischen Abweichung von der mittleren Drehzahl von zum Beispiel 1% charakteristisch. Bei dem in diesem Dokument beschriebenen Ansatz ist durchaus damit zu rechnen, dass die Drehzahl in 0,5s um zum Beispiel 6% einbricht (=12%/s). Diese abrupte Variation verdeutlicht den Störungscharakter der Aktion, denn das aufgrund der Musterüberwachung erkannte, also bereits bestehende Mühlenrumpeln kann lediglich gestört werden, sodass es mit einer gewissen Wahrscheinlichkeit abklingt oder unterbrochen wird.

## Patentansprüche

1. Verfahren zur Antriebsregelung einer Vertikalmühle (10) mit einem um die Vertikale rotierbaren Mahlteller (12), wobei der Mahlteller (12) durch einen einen Elektromotor (14) und ein Getriebe (16) umfassenden Antriebsstrang antreibbar ist,
wobei ein aufgrund aufgenommener schwingungsrelevanter Messwerte (28) resultierender Messwertverlauf (30) auf das Auftreten eines vorgegebenen Musters (32) in dem Messwertverlauf (30) überwacht wird und
wobei im Falle eines in dem Messwertverlauf (30) erkannten Musters (32) die Drehzahl des Mahltellers (12) automatisch um einen vorgegebenen oder vorgebbaren Anpassungswert (38) erhöht oder verringert wird,
wobei als überwachtes Muster (32) die mehrmalige Überschreitung eines vorgegebenen oder vorgebbaren Schwellwerts (34) im Drehmoment- oder Drehzahlmesswertverlauf während einer vorgegebenen oder vorgebbaren Zeitspanne fungiert, und/oder
wobei als überwachtes Muster (32) die ein- oder mehrmalige Überschreitung des Schwellwerts (34) im Drehmoment- oder Drehzahlmesswertverlauf mit einer vorgegebenen oder vorgebbaren Geschwindigkeit fungiert, und/oder
wobei als überwachtes Muster (32) eine Überschreitung eines vorgegebenen oder vorgebbaren Schwellwerts (34) in einer Darstellung des Drehmoment- oder Drehzahlmesswertverlaufs (30) in einem Frequenzbereich fungiert.

2. Verfahren nach Anspruch 1, wobei der Elektromotor (14) von einem Frequenzumrichter (44) gespeist wird und wobei die Erhöhung oder Verringerung der Drehzahl des Mahltellers (12) um den Anpassungswert (38) mittels einer entsprechenden Ansteuerung des Frequenzumrichters (44) erfolgt.

3. Verfahren nach Anspruch 1 oder 2, mit Drehmoment- oder Drehzahlmesswerten (28) als schwingungsrelevanten Messwerten (28), wobei zum Erhalt der Drehmoment- oder Drehzahlmesswerte (28) eine Sensorik (26) eine Drehzahl eines rotierenden Bauteils des Antriebsstrangs und/oder mindestens ein im oder auf das Getriebe (16) wirkendes Antriebs- und/oder Stützmoment erfasst.

4. Verfahren nach einem der Ansprüche 1 bis 3, wobei die Mustererkennung kontinuierlich durchgeführt wird und wobei die Erhöhung oder Verringerung der Drehzahl des Mahltellers (12) zurückgenommen wird, wenn das überwachte Muster (32) in dem Messwertverlauf (30) nicht mehr erkannt wird.

5. Verfahren nach einem der Ansprüche 1 bis 4, wobei die Mustererkennung kontinuierlich durchgeführt wird und wobei jedes Mal, wenn in dem Messwertverlauf (30) ein überwachtes Muster (32) erkannt wird, die Drehzahl des Mahltellers (12) automatisch um den vorgegebenen oder vorgebbaren Anpassungswert (38) erhöht oder verringert wird.

6. Antriebssystem (60) für eine Vertikalmühle (10) mit einem um die Vertikale rotierbaren Mahlteller (12), wobei das Antriebssystem (60)
- einen Elektromotor (14),
- einen den Elektromotor (14) speisenden Frequenzumrichter (44),
- ein Getriebe (16) zwischen dem Elektromotor (14) und dem Mahlteller (12) sowie
- eine Mustererkennungsvorrichtung (42) umfasst,
wobei mittels der Mustererkennungsvorrichtung (42) in einem aufgrund aufgenommener schwingungsrelevanter Messwerte (28) resultierenden Messwertverlauf (30) ein vorgegebenes oder vorgebbares Muster (32) erkennbar ist und **dadurch gekennzeichnet, dass**
im Falle eines erkannten Musters (32) eine Drehzahl des Mahltellers (12) der Vertikalmühle (10) automatisch um einen vorgegebenen oder vorgebbaren Anpassungswert (38) erhöhbar oder verringerbar ist,
wobei als überwachtes Muster (32) die mehrmalige Überschreitung eines vorgegebenen oder vorgebbaren Schwellwerts (34) im Drehmoment- oder Drehzahlmesswertverlauf während einer vorgegebenen oder vorgebbaren Zeitspanne fungiert, und/oder
wobei als überwachtes Muster (32) die ein- oder mehrmalige Überschreitung des Schwellwerts (34) im Drehmoment- oder Drehzahlmesswertverlauf mit einer vorgegebenen oder vorgebbaren Geschwindigkeit fungiert, und/oder
wobei als überwachtes Muster (32) eine Überschreitung eines vorgegebenen oder vorgebbaren Schwellwerts (34) in einer Darstellung des Drehmoment- oder Drehzahlmesswertverlaufs (30) in einem Frequenzbereich fungiert.

7. Antriebssystem (60) nach Anspruch 6 mit einer Sensorik (26), mittels derer zum Erhalt eines schwingungsrelevanten Messwerts (28) in Form eines Drehmoment- oder Drehzahlmesswerts (28) eine Drehzahl eines rotierenden Bauteils der Vertikalmühle (10) und/oder mindestens ein im oder auf das Getriebe (16) wirkendes Antriebs- und/oder Stützmoment erfassbar ist.

8. Computerprogramm (52) mit Programmcodemitteln, um alle Schritte von jedem beliebigen der Ansprüche 1 bis 5 durchzuführen, wenn das Computerprogramm (52) auf einem Steuergerät (56) eines Antriebssystems (60) für eine Vertikalmühle (10) ausgeführt wird.

9. Digitales Speichermedium mit elektronisch auslesbaren Steuersignalen, die so mit einem programmierbaren Steuergerät (56) für ein Antriebssystem (60) für eine Vertikalmühle (10) zusammenwirken können, dass ein Verfahren nach einem der Ansprüche 1 bis 5 ausgeführt wird.

10. Steuergerät (56) eines Antriebssystems (60) einer Vertikalmühle (10) nach Anspruch 6 oder 7, mit einer Verarbeitungseinheit (54) und einem Speicher, in den ein Computerprogramm (52) nach Anspruch 8 geladen ist, das im Betrieb des Steuergeräts (56) durch die Verarbeitungseinheit (54) ausgeführt wird.

## Claims

1. Drive control method for a vertical roller mill (10) having a grinding table (12) rotatable about the vertical,
wherein the grinding table (12) can be driven by a drive train comprising an electric motor (14) and a gearbox (16), wherein a measured value characteristic (30) resulting from recorded vibration-relevant measured values (28) is monitored for the occurrence of a predefined pattern (32) in the measured value characteristic (30) and
wherein in the event of a pattern (32) being identified in the measured value characteristic (30), the rotation speed of the grinding table (12) is automatically increased or reduced by a predefined or predefinable adjustment value (38),
wherein the repeated exceedance of a predefined or predefinable threshold value (34) in the torque or speed measured value characteristic over a predefined or predefinable time period is used as the monitored pattern (32), and/or
wherein the single or repeated exceedance of the threshold value (34) in the torque or speed measured value characteristic at a predefined or predefinable rate is used as the monitored pattern (32), and/or
wherein an exceedance of a predefined or predefinable threshold value (34) in a plot of the torque or speed measured value characteristic (30) in a frequency range is used as the monitored pattern (32).

2. Method according to Claim 1, wherein the electric motor (14) is fed by a frequency converter (44) and wherein the rotation speed of the grinding table (12) is increased or reduced by the adjustment value (38) by means of appropriate control of the frequency converter (44) .

3. Method according to Claim 1 or 2, having torque or speed measured values (28) as vibration-relevant measured values (28), wherein to obtain the torque or speed measured values (28), a sensor system (26) measures a rotation speed of a rotating component of the drive train and/or at least one driving and/or supporting torque acting in or on the gearbox (16).

4. Method according to one of Claims 1 to 3, wherein pattern recognition is performed continuously and wherein the increase or reduction in the rotation speed of the grinding table (12) is undone if the monitored pattern (32) is no longer detected in the measured value characteristic (30).

5. Method according to one of Claims 1 to 4, wherein pattern recognition is performed continuously and wherein each time a monitored pattern (32) is detected in the measured value characteristic (30), the rotation speed of the grinding table (12) is automatically increased or reduced by the predefined or predefinable adjustment value (38).

6. Drive system (60) for a vertical roller mill (10) having a grinding table (12) rotatable about the vertical, wherein the drive system (60) comprises
- an electric motor (14),
- a frequency converter (44) feeding the electric motor (14),
- a gearbox (16) between the electric motor (14) and the grinding table (12), and
- a pattern recognition device (42),
wherein a predefined or predefinable pattern (32) in a measured value characteristic (30) resulting from recorded vibration-relevant measured values (28) can be identified using the pattern recognition device (42) and
**characterized in that**
in the event of a pattern (32) being detected, a rotation speed of the grinding table (12) of the vertical roller mill (10) can be automatically increased or reduced by a predefined or predefinable adjustment value (38),
wherein the repeated exceedance of a predefined or predefinable threshold value (34) in the torque or speed measured value characteristic over a predefined or predefinable time period is used as the monitored pattern (32), and/or
wherein the single or repeated exceedance of the threshold value (34) in the torque or speed measured value characteristic at a predefined or predefinable rate is used as the monitored pattern (32), and/or
wherein an exceedance of a predefined or predefinable threshold value (34) in a plot of the torque or speed measured value characteristic (30) in a frequency range is used as the monitored pattern (32).

7. Drive system (60) according to Claim 6, comprising a sensor system (26) by means of which a rotation speed of a rotating component of the vertical roller mill (10) and/or at least one driving or supporting torque acting in or on the gearbox (16) can be acquired in order to obtain a vibration-relevant measured value (28) in the form of a torque or speed measurement (28).

8. Computer program (52) having program code means for carrying out all the steps of any of Claims 1 to 5 when the computer program (52) is executed on a controller (56) of a drive system (60) for a vertical roller mill (10) .

9. Digital storage medium having electronically readable control signals which can interact with a programmable controller (56) for a drive system (60) for a vertical roller mill (10) such that a method according to one of Claims 1 to 5 can be carried out.

10. Controller (56) of a drive system (60) of a vertical roller mill (10) according to Claim 6 or 7, comprising a processing unit (54) and a memory into which is loaded a computer program (52) according to Claim 8 which is executed by the processing unit (54) during operation of the controller (56).

## Revendications

1. Procédé de réglage d'entraînement d'un broyeur vertical (10), comprenant un plateau de broyage (12) pouvant tourner autour de la verticale, le plateau de broyage (12) pouvant être entraîné par un train d'entraînement comprenant un moteur électrique (14) et une transmission (16), dans lequel on surveille l'apparition (30) d'un motif (32) prédéfini dans une courbe de valeurs de mesure (30) résultant de valeurs de mesure (28) enregistrées et pertinentes pour l'oscillation, et
si un motif (32) est reconnu dans la courbe de valeurs de mesure (30), la vitesse de rotation du plateau de broyage (12) est automatiquement augmentée ou diminuée d'une valeur d'adaptation (38) prédéfinie ou prédéfinissable,
dans lequel le dépassement répété d'une valeur seuil (34) prédéfinie ou prédéfinissable dans la courbe de valeurs de mesure de couple ou de vitesse de rotation pendant une période prédéfinie ou prédéfinissable sert de motif surveillé (32), et/ou
dans lequel le dépassement unique ou répété de la valeur seuil (34) dans la courbe de valeurs de mesure de couple ou de vitesse de rotation à une vitesse prédéfinie ou prédéfinissable sert de motif surveillé (32), et/ou
dans lequel un dépassement d'une valeur seuil (34) prédéfinie ou prédéfinissable dans une représentation de la courbe de valeurs de mesure (30) de couple ou de vitesse de rotation dans une plage de fréquences sert de motif surveillé (32).

2. Procédé selon la revendication 1, dans lequel le moteur électrique (14) est alimenté par un convertisseur de fréquence (44), et dans lequel l'augmentation ou la diminution de la vitesse de rotation du plateau de broyage (12) de la valeur d'adaptation (38) est effectuée au moyen d'une commande correspondante du convertisseur de fréquence (44).

3. Procédé selon la revendication 1 ou 2, avec des valeurs de mesure (28) de couple ou de vitesse de rotation comme valeurs de mesure (28) pertinentes pour l'oscillation, dans lequel, pour obtenir les valeurs de mesure (28) de couple ou de vitesse de rotation, un système de détection (26) détecte une vitesse de rotation d'un composant tournant du train d'entraînement et/ou au moins un couple d'entraînement et/ou un moment sur appui agissant dans ou sur la transmission (16).

4. Procédé selon l'une quelconque des revendications 1 à 3, dans lequel la reconnaissance de motif est effectuée en continu, et dans lequel l'augmentation ou la diminution de la vitesse de rotation du plateau de broyage (12) est annulée si le motif surveillé (32) n'est plus reconnu dans la courbe de valeurs de mesure (30) .

5. Procédé selon l'une quelconque des revendications 1 à 4, dans lequel la reconnaissance de motif est effectuée en continu, et dans lequel chaque fois qu'un motif surveillé (32) est reconnu dans la courbe de valeurs de mesure (30), la vitesse de rotation du plateau de broyage (12) est augmentée ou diminuée automatiquement de la valeur d'adaptation (38) prédéfinie ou prédéfinissable.

6. Système d'entraînement (60) pour un broyeur vertical (10) comprenant un plateau de broyage (12) tournant autour de la verticale, le système d'entraînement (60) comprenant
- un moteur électrique (14),
- un convertisseur de fréquence (44) alimentant le moteur électrique (14),
- une transmission (16) entre le moteur électrique (14) et le plateau de broyage (12), ainsi que
- un dispositif de reconnaissance de motif (42),
dans lequel le dispositif de reconnaissance de motif (42) permet de reconnaître un motif (32) prédéfini ou prédéfinissable dans une courbe de valeurs de mesure (30) résultant de valeurs de mesure (28) enregistrées et pertinentes pour l'oscillation, et
**caractérisé en ce que**, si un motif (32) est reconnu, une vitesse de rotation du plateau de broyage (12) du broyeur vertical (10) peut être augmentée ou diminuée automatiquement d'une valeur d'adaptation (38) prédéfinie ou prédéfinissable,
dans lequel le dépassement répété d'une valeur seuil (34) prédéfinie ou prédéfinissable dans la courbe de valeurs de mesure de couple ou de vitesse de rotation pendant une période prédéfinie ou prédéfinissable sert de motif surveillé (32), et/ou
dans lequel le dépassement unique ou répété de la valeur seuil (34) dans la courbe de valeurs de mesure de couple ou de vitesse de rotation à une vitesse prédéfinie ou prédéfinissable sert de motif surveillé (32), et/ou
dans lequel un dépassement d'une valeur seuil (34) prédéfinie ou prédéfinissable dans une représentation de la courbe de valeurs de mesure (30) de couple ou de vitesse de rotation dans une plage de fréquences sert de motif surveillé (32).

7. Système d'entraînement (60) selon la revendication 6, comprenant un système de détection (26) permettant de détecter une vitesse de rotation d'un composant tournant du broyeur vertical (10) et/ou au moins un couple d'entraînement et/ou un moment sur appui agissant dans ou sur la transmission (16) afin d'obtenir une valeur de mesure (28) pertinente pour l'oscillation sous la forme d'une valeur de mesure (28) de couple ou de vitesse de rotation.

8. Programme informatique (52) comprenant des moyens de code programme pour effectuer toutes les étapes de chacune des revendications 1 à 5 lorsque le programme informatique (52) est exécuté sur un appareil de commande (56) d'un système d'entraînement (60) du broyeur vertical (10).

9. Support de stockage numérique, comprenant des signaux de commande lisibles électroniquement, qui peuvent coopérer avec un appareil de commande (56) programmable pour un système d'entraînement (60) d'un broyeur vertical (10) de façon à exécuter un procédé selon l'une quelconque des revendications 1 à 5.

10. Appareil de commande (56) d'un système d'entraînement (60) d'un broyeur vertical (10) selon la revendication 6 ou 7, comprenant une unité de traitement (54) et une mémoire, dans laquelle un programme informatique (52) selon la revendication 8 est chargé, qui est exécuté par l'unité de traitement (54) en cours de fonctionnement de l'appareil de commande (56).
